# EUROPEAN PATENT APPLICATION

(11) **EP 4 843 854 A1**
(43) Date of publication of application: **25.11.2026**
(21) Application number: 25178468.2
(22) Date of filing: 23.05.2025
(51) Int. Cl.: B60W 30/18, F16H 48/20, F16H 63/50

(54) **DIFFERENTIAL LOCK CONTROL IN RESPONSE TO ACCELERATION**

(71) Applicant: Volvo Truck Corporation, 405 08 Göteborg (SE)
(72) Inventor: WÖLFINGER, Alexander, 442 65 MARSTRAND (SE); BUSTRÉN, Cecilia, 417 02 GÖTEBORG (SE); AGARWAL, Rohit, 417 23 GÖTEBORG (SE)
(74) Representative: Kransell & Wennborg KB

(57) **Abstract**

The present disclosure relates to a computer system comprising processing circuitry configured to receive a monitored acceleration level of a drive shaft of a vehicle; generate a differential lock request for a differential lock of a differential gear, the differential lock request being generated in response to the monitored acceleration level exceeding a predetermined acceleration threshold; determine a current wheel speed for each of a pair of wheels of the vehicle; and transmit the differential lock request to the differential lock, the differential lock request instructing the differential lock to engage once the a difference in wheel speed between the pair of wheels falls below a predetermined speed threshold.

## Description

### TECHNICAL FIELD

The disclosure relates generally to the control of a differential lock. In particular aspects, the disclosure relates to differential lock control in response to vehicle speed and acceleration. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In vehicles equipped with differential gears, traction control is essential for maintaining drivability under varying surface conditions. Conventional systems typically rely on wheel speed differences to determine when to engage a differential lock. However, these systems often use high engagement thresholds to avoid unnecessary locking, which can delay activation and affect performance in low-traction scenarios. Managing driveline behavior in such conditions remains a challenge, particularly in balancing timely lock engagement with mechanical compatibility and propulsion efficiency.

### SUMMARY

According to a first aspect of the disclosure, there is provided a computer system comprising processing circuitry configured to: receive a monitored acceleration level of a drive shaft of a vehicle; generate a differential lock request for a differential lock of a differential gear, the differential lock request being generated in response to the monitored acceleration level exceeding a predetermined acceleration threshold; determine a current wheel speed for each of a pair of wheels of the vehicle; and transmit the differential lock request to the differential lock, the differential lock request instructing the differential lock to engage once a difference in wheel speed between the pair of wheels falls below a predetermined speed threshold. The first aspect of the disclosure may seek to address the issues associated with delayed or unsuccessful engagement of a differential lock due to excessive wheel speed differences, by enabling earlier detection of traction-critical conditions through monitoring of driveline acceleration, thereby allowing the differential lock to be requested and engaged at an earlier stage under mechanically permissible conditions without requiring propulsion force reduction. A technical benefit may include that an earlier engagement of the differential lock may be enabled under conditions where mechanical locking is still feasible. The differential lock can thus be engaged before the wheel(s) spin out, thereby substantially avoiding any excessive wheel speed difference at all. The need for propulsion torque reduction or braking interventions may hereby be reduced, which can improve traction performance, drivability, and reduce wear on drivetrain components in low-traction or uneven surface conditions.

A differential lock may be provided for selectively locking a differential gear in a drivetrain of a vehicle. The differential gear may be arranged between two wheels on a common axle (inter-wheel differential) or between two axles in a multi-axle vehicle (inter-axle differential). When engaged, the differential lock constrains the relative rotational speed between the output shafts of the differential, causing torque to be distributed equally and forcing the connected wheels or axles to rotate at the same speed. This can improve traction in low-friction or uneven terrain conditions by preventing wheel slip on one side of the differential.

Further, the predetermined acceleration threshold referenced herein may be dynamically calculated based on various vehicle and operating parameters. The calculation may take into account, for example, the vehicle's mass, the driver's requested acceleration, the road gradient or profile, and indications of previous wheel slip, which may provide an indirect estimate of road surface friction. The calculation may further incorporate standard constants such as gravitational acceleration and gear ratios. The resulting predetermined acceleration threshold may serve as a control reference in the propulsion control system and may be used to trigger corrective actions if exceeded. As such, the predetermined acceleration threshold may vary in real time in response to current driving and environmental conditions.

Optionally in some examples, including in at least one preferred example, the processing circuitry is configured to control the acceleration level and/or a rotational speed of the drive shaft to be reduced in response to the difference in wheel speed exceeding the predetermined speed threshold. A technical benefit may include that either or both of an acceleration level and a rotational speed of the drive shaft can be controlled in order to obtain a reduced difference in wheel speed such that the differential lock can be engaged.

Optionally in some examples, including in at least one preferred example, the processing circuitry is configured to control the acceleration level of the driveshaft by controlling a prime mover to reduce a propulsion torque delivered to the drive shaft. A technical benefit may include that controlled reduction of driveline acceleration may be enabled through adjustment of the propulsion torque, which may allow the system to maintain vehicle stability and prepare for differential lock engagement without abrupt torque cuts or additional braking. Smoother drivability may thereby be achieved with a reduction of unnecessary powertrain intervention.

Optionally in some examples, including in at least one preferred example, the prime mover is an electric machine. A technical benefit may include that an electric machine, as the prime mover, may enable more rapid and precise control of propulsion torque compared to a conventional internal combustion engine, thereby allowing faster and more accurate adjustment of driveline dynamics to facilitate differential lock engagement. The use of an electric machine may improve system responsiveness and vehicle drivability, particularly in situations requiring immediate traction adaptation.

Optionally in some examples, including in at least one preferred example, the processing circuitry is configured to receive wheel speed sensor data to determine the current wheel speed. A technical benefit may include that receiving wheel speed sensor data enables accurate and real-time determination of the current wheel speed, which may improve the reliability and responsiveness of the differential lock control system, particularly under dynamic traction conditions.

Optionally in some examples, including in at least one preferred example, the processing circuitry is further configured to control the differential lock to engage in response to the difference in wheel speed between the pair of wheels falling below the predetermined speed threshold. A technical benefit may include that the differential lock can be controlled to engage only when the difference in wheel speed falls below the predetermined speed threshold which may ensure that engagement occurs under mechanically permissible conditions. A reduced risk of gear damage may be obtained and smoother operation of the locking mechanism may be provided.

Optionally in some examples, including in at least one preferred example, the processing circuitry is further configured to: control the difference in wheel speed between the pair of wheels to be reduced in response to the difference in current wheel speed between the pair of wheels exceeding the predetermined speed threshold. A technical benefit may include that the difference in wheel speed between the pair of wheels can be actively reduced when the difference exceeds the predetermined speed threshold, which may assist in bringing the rotational speeds within a range suitable for differential lock engagement. This may improve the likelihood of successful engagement while reducing the need for aggressive braking or other corrective measures.

Optionally in some examples, including in at least one preferred example, the processing circuitry is configured to reduce the difference in wheel speed between the pair of wheels by limiting a propulsion torque delivered to the drive shaft. A technical benefit may include that the difference in wheel speed between the pair of wheels can be reduced by limiting the propulsion torque delivered to the drive shaft, which may enable smoother synchronization of wheel speeds without requiring direct braking.

Optionally in some examples, including in at least one preferred example, the processing circuitry is configured to reduce the difference in wheel speed between the pair of wheels by limiting a rate of increase of propulsion torque delivered to the drive shaft. A technical benefit may include that a gradual driveline response may be obtained. Limiting the torque ramp rate may support improved traction control and drivability, particularly in conditions where rapid torque delivery would otherwise amplify speed differences.

Optionally in some examples, including in at least one preferred example, the processing circuitry is configured to reduce the difference in wheel speed between the pair of wheels by controlling the rotational speed of the drive shaft. The rotational speed of the drive shaft can be controlled a PID controller. An upper and lower speed limit can be set for the drive shaft, wherein the rotational speed of the drive shaft will not fall outside the speed range formed by these speed limits. The PID controller may thus be configured to maintain the rotational speed of the drive shaft within the speed range. Increasing or decreasing the rotational speed may be obtained by adding/reducing motor torque from the prime mover, such as the electric machine. However, the rotational speed of the drive shaft may also be affected by road profile, road surface conditions, etc. Rotational speed is however the control reference in the PID controller.

According to a second aspect, there is provided a vehicle comprising the computer system of any of the examples described above in relation to the first aspect.

Effects and features of the second aspect are largely analogous to those described above in relation to the first aspect.

According to a third aspect, there is provided a computer-implemented method, comprising: monitoring, by processing circuitry of a computer system, an acceleration level of a drive shaft of a vehicle; generating, by the processing circuitry, a differential lock request for a differential lock of a differential gear, the differential lock request being generated in response to the monitored acceleration level exceeding a predetermined acceleration threshold; determining, by the processing circuitry, a current wheel speed for each of a pair of wheels of the vehicle; and transmitting, by the processing circuitry, the differential lock request to the differential lock, the differential lock request instructing the differential lock to engage once a difference in wheel speed between the pair of wheels falls below a predetermined speed threshold. The third aspect of the disclosure may seek to address the issues associated with delayed or unsuccessful engagement of a differential lock due to excessive wheel speed differences, by enabling earlier detection of traction-critical conditions through monitoring of driveline acceleration, thereby allowing the differential lock to be requested and engaged at an earlier stage under mechanically permissible conditions without requiring propulsion force reduction. A technical benefit may include that an earlier engagement of the differential lock may be enabled under conditions where mechanical locking is still feasible. The differential lock can thus be engaged before the wheel(s) spin out, thereby substantially avoiding any excessive wheel speed difference at all. The need for propulsion torque reduction or braking interventions may thereby be reduced, which can improve traction performance, drivability, and reduce wear on drivetrain components in low-traction or uneven surface conditions.

Optionally in some examples, including in at least one preferred example, the method further comprises: controlling, by the processing circuitry, the acceleration level and/or a rotational speed of the drive shaft to be reduced in response to the difference in wheel speed exceeding the predetermined speed threshold.

Optionally in some examples, including in at least one preferred example, the method further comprises: controlling, by the processing circuitry, the acceleration level of the driveshaft by controlling a prime mover to reduce a propulsion torque delivered to the drive shaft. A technical benefit may include that controlled reduction of driveline acceleration may be enabled through adjustment of the propulsion torque, which may allow the method to maintain vehicle stability and prepare for differential lock engagement without abrupt torque cuts or additional braking. Smoother drivability may thereby be achieved with a reduction of unnecessary powertrain intervention.

Optionally in some examples, including in at least one preferred example, the prime mover is an electric machine. A technical benefit may include that an electric machine, as the prime mover, may enable more rapid and precise control of propulsion torque compared to a conventional internal combustion engine, thereby allowing faster and more accurate adjustment of driveline dynamics to facilitate differential lock engagement. The use of an electric machine may improve system responsiveness and vehicle drivability, particularly in situations requiring immediate traction adaptation.

Optionally in some examples, including in at least one preferred example, further comprising: receiving, by the processing circuitry, wheel speed sensor data to determine the current wheel speed. A technical benefit may include that receiving wheel speed sensor data may enable accurate and real-time determination of the current wheel speed, which may improve the reliability and responsiveness of the differential lock control method, particularly under dynamic traction conditions.

Optionally in some examples, including in at least one preferred example, the method further comprises: controlling, by the processing circuitry, the differential lock to engage in response to the difference in wheel speed between the pair of wheels falling below the predetermined speed threshold. A technical benefit may include that the differential lock can be controlled to engage only when the difference in wheel speed falls below the predetermined speed threshold, which may ensure that engagement occurs under mechanically permissible conditions. A reduced risk of gear damage may be obtained and smoother operation of the locking mechanism may be provided. The predetermined speed threshold may thus be a threshold limit below which it may be suitable to engage the differential lock.

Optionally in some examples, including in at least one preferred example, the method further comprises: controlling, by the processing circuitry, the difference in wheel speed between the pair of wheels to be reduced in response to the difference in current wheel speed between the pair of wheels exceeding the predetermined speed threshold. A technical benefit may include that the difference in wheel speed between the pair of wheels can be actively reduced when the difference exceeds the predetermined speed threshold, which may assist in bringing the rotational speeds within a range suitable for differential lock engagement. This may improve the likelihood of successful engagement while reducing the need for aggressive braking or other corrective measures.

Optionally in some examples, including in at least one preferred example, the method further comprises: reducing, by the processing circuitry, the difference in wheel speed between the pair of wheels by limiting a propulsion torque delivered to the drive shaft. A technical benefit may include that the difference in wheel speed between the pair of wheels can be reduced by limiting the propulsion torque delivered to the drive shaft, which may enable smoother synchronization of wheel speeds without requiring direct braking.

Optionally in some examples, including in at least one preferred example, the method further comprises: reducing, by the processing circuitry, the difference in wheel speed between the pair of wheels by limiting a rate of increase of propulsion torque delivered to the drive shaft. A technical benefit may include that a gradual driveline response may be obtained. Limiting the torque ramp rate may support improved traction control and drivability, particularly in conditions where rapid torque delivery would otherwise amplify speed differences.

Further effects and features of the third aspect are largely analogous to those described above in relation to the first aspect.

According to a fourth aspect, there is provided a computer program product comprising program code for performing, when executed by the processing circuitry, the method of any of the examples described above in relation to the third aspect.

According to a fifth aspect, there is provided a non-transitory computer-readable storage medium comprising instructions, which when executed by the processing circuitry, cause the processing circuitry to perform the method of any of the examples described above in relation to the third aspect.

Effects and features of the fourth and fifth aspects are largely analogous to those described above in relation to the first and third aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example.
Fig. 2 is an exemplary illustration of a driveline of the vehicle according to an example.
Fig. 3 is an exemplary flow chart of a method of controlling a range gear according to an example.
Fig. 4 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The following disclosure aims at addressing issues associated with delayed or unsuccessful engagement of a differential lock due to excessive wheel speed differences, by enabling earlier detection of traction-critical conditions through monitoring of driveline acceleration, thereby allowing the differential lock to be requested and engaged at an earlier stage under mechanically permissible conditions without requiring propulsion force reduction. A technical benefit may include that an earlier engagement of the differential lock may be enabled under conditions where mechanical locking is still feasible.

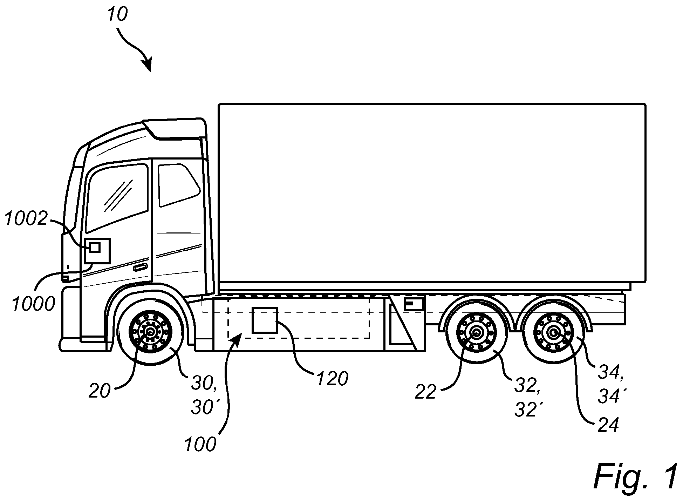

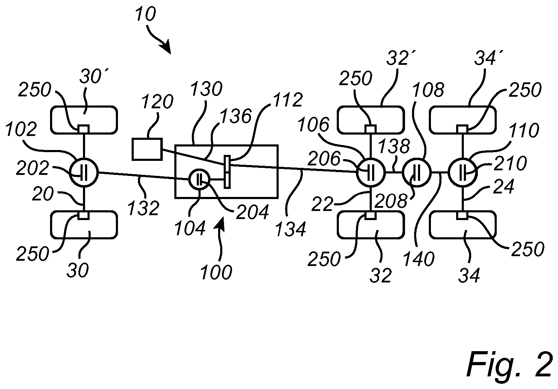

With reference to Fig. 1 which illustrates an exemplary vehicle 10 according to an example. The exemplified vehicle 10 comprises a driveline 100. The driveline comprises a traction motor 120. According to an example, the traction motor 120 is an electric machine and will in the following be referred to as such. The electric machine is configured to deliver torque to the wheels of the vehicle 10 and to operate in a regenerative mode during braking, thereby enabling recovery of electrical energy. Further details of an exemplary driveline will be given below in relation to Fig. 2. The traction motor may alternatively be an internal combustion engine but will in the following be described in relation to an electric machine for simplifying for the skilled reader.

The vehicle 10 further comprises a pair of front wheels 30, 30', a pair of foremost rear wheels 32, 32', and a pair of rearmost rear wheels 34, 34'. The pair of front wheels 30, 30' are connected to a front drive shaft 20, the pair of foremost rear wheels 32, 32' are connected to a foremost rear drive shaft 22, and the pair of rearmost rear wheels 34, 34' are connected to a rearmost rear drive shaft 24.

The exemplified vehicle 10 also comprises a computer system 1000 comprising processing circuitry 1002 configured to control, for example, the electric machine as well as the differential locks described below in relation to the description of Fig. 2. In order to describe an exemplary driveline 100 of the vehicle, reference is now made to Fig. 2.

Fig. 2 illustrates an exemplary driveline 100 of the vehicle 10. The driveline includes the above described front drive shaft 20, the foremost rear drive shaft 22, and the rearmost rear drive shaft 24. The pair of front wheels 30, 30' is connected to the front drive shaft 20. The pair of front wheels 30, 30' comprises a first front wheel 30 and a second front wheel 30'. Similarly, the pair of foremost rear wheels 32, 32' is connected to the foremost rear drive shaft 22, and the pair of rearmost rear wheels 34, 34' is connected to the rearmost rear drive shaft 24. The pair of foremost rear wheels 32, 32' comprises a first foremost rear wheel 32 and a second foremost rear wheel 32', while the pair of rearmost rear wheels 34, 34' comprises a first rearmost rear wheel 34 and a second rearmost rear wheel 34'.

Furthermore, the driveline comprises a number of differential gears. In the exemplified Fig. 2, a first differential gear 102 is connected to the front drive shaft 20 and to a first propulsion shaft 132. The first differential gear 102 may also be referred to as an inter-wheel differential gear for the front axle. A second differential gear 104 is connected to the first propulsion shaft 132 and to a reduction gear stage 112. The second differential gear 104 may also be referred to as a transfer case lock. A third differential gear 106 is connected to the foremost rear drive shaft 22 and to the reduction gear stage 112 via a second propulsion shaft 134, and may be referred to as an inter-wheel differential gear for the foremost rear axle. A fourth differential gear 108 connects the foremost and rearmost rear drive shafts 22, 24 via a third propulsion shaft 140, and may be referred to as an inter-axle differential gear. A fifth differential gear 110 is connected to the rearmost rear drive shaft 24 and may be referred to as an inter-wheel differential gear for the rearmost rear axle.

Each of the differential gears 102, 104, 106, 108, 110 may be associated with a respective differential lock: 202, 204, 206, 208, and 210, respectively. These differential locks are configured to selectively constrain relative motion within the corresponding differential gear to enable torque transfer under traction-compromised conditions.

As described above, the driveline 100 further comprises a prime mover 120 in the form of an electric machine. An output shaft 136 of the prime mover 120 is connected to the reduction gear stage 112.

Moreover, wheel speed sensors 250 are operatively connected to each wheel 30, 30', 32, 32', 34, 34'. The wheel speed sensors 250 are configured to provide wheel speed data to the processing circuitry 1002 described above in relation to Fig. 1.

It should be noted that the differential gears illustrated in Fig. 2 are included for illustrative purposes only. The disclosure is not limited to a driveline architecture including all of the shown differential gears. The teachings of the present disclosure may be applied to driveline configurations including any one of the differential gears 102, 104, 106, 108, 110 individually or in any combination. The teaching of the disclosure may also be applied to driveline configurations including further differential gears in addition to those described above and illustrated in Fig. 2. It may be sufficient that only a single differential gear and associated differential lock is present in the driveline for the disclosure described below to function as intended.

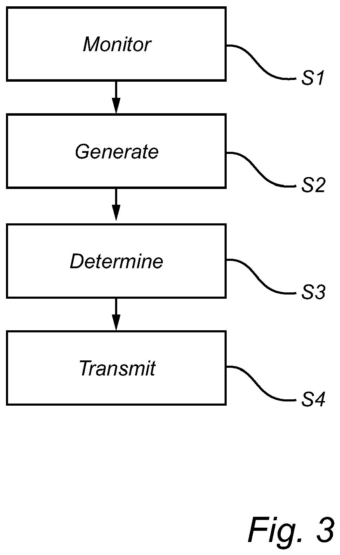

Reference is now made to Fig. 3 which is an exemplary flow chart of a computer implemented method of controlling the above described driveline 100 according to an example. During operation, the processing circuitry 1002 is configured to receive S1 a monitored acceleration level of one or more of the above described drive shafts 20, 22, 24 of the vehicle 10. According to an example, the acceleration level may be monitored for the wheels and speed of the electric machine, which in turn are connected to the drive shaft(s), thereby monitoring the acceleration level of the drive shaft. The acceleration level may be derived from, for example, data received from acceleration sensors (not shown) positioned on the respective drive shaft.

Upon determining that the monitored acceleration level exceeds a predetermined acceleration threshold, the processing circuitry 1002 is configured to generate S2 a differential lock request for the differential lock (e.g., 202, 204, 206, 208, or 210) associated with a corresponding differential gear (e.g., 102, 104, 106, 108, or 110). The differential lock request may be a command or signal configured to prepare the lock for engagement when conditions permit.

Optionally, the processing circuitry 1002 is further configured to control the acceleration level and/or rotational speed of the drive shaft to be reduced. This may involve initiating control actions directed at limiting propulsion torque or regulating motor response, depending on the nature of the prime mover used in the vehicle.

The processing circuitry 1002 is also configured to determine S3 a current wheel speed for each wheel of a pair of wheels of the vehicle, such as the pair of wheels 30 and 30', 32 and 32', or 34 and 34'. The current wheel speed may be determined by the processing circuitry 1002 using data received from the wheel speed sensors 250. The difference in current wheel speeds between the pair of wheels is then calculated.

Furthermore, the differential lock request is then transmitted S4 to the relevant differential . However, actual engagement of the differential lock is delayed until the wheel speed difference falls below a predetermined speed threshold. The predetermined speed threshold is set to a value that ensures that the differential lock is engaged under conditions where mechanical locking is permissible, thereby avoiding, for example, gear clash or damage. This is applicable for both inter-wheel differential locks as well as for inter-axel differential locks.

The described computer system thus enables early detection of traction-critical conditions via driveline acceleration, and ensures that the differential lock is engaged at a mechanically safe time.

In some examples, the processing circuitry 1002 may be configured to control the acceleration level of the drive shaft 20, 22, or 24 by regulating the operation of the prime mover 120, such as the electric machine described in Fig. 2. By reducing the propulsion torque delivered to the drive shaft, the driveline acceleration may be decreased to maintain operational conditions favorable for differential lock engagement, particularly in response to rapidly changing traction scenarios.

Following generation of the differential lock request, the processing circuitry 1002 may be further configured to control the differential lock (e.g., 202, 204, 206, 208, and/or 210) to engage in response to the difference in wheel speed between the pair of wheels falling below the predetermined speed threshold. This may ensure that engagement occurs only when the wheels are rotating at sufficiently similar speeds to permit mechanical locking without causing gear clash or drivetrain stress.

Additionally, the computer system 1000 may be configured to actively reduce the difference in wheel speed between the pair of wheels when the measured difference exceeds the predetermined speed threshold. By actively reducing the difference in wheel speed the wheel speeds may be brought into a range that is compatible with differential lock engagement. Such reduction in speed difference may be achieved through multiple control mechanisms.

For example, in one implementation, the processing circuitry 1002 may reduce the difference in wheel speed by limiting the propulsion torque delivered to the drive shaft. By modulating torque in this manner, the system can influence the traction force distribution across the wheels, slowing the rotation of faster-moving wheels or minimizing slip-induced speed separation.

In another implementation, the processing circuitry may limit a rate of increase of propulsion torque delivered to the drive shaft. This strategy, commonly referred to as torque ramp-rate control, facilitates a more gradual driveline response, reducing the likelihood of abrupt wheel speed divergence when sudden traction changes occur.

Alternatively or additionally, the processing circuitry may be configured to reduce the wheel speed difference by controlling the rotational speed of the drive shaft itself. The rotational speed of the drive shaft can be controlled a PID controller. An upper and lower speed limit can be set for the drive shaft, wherein the rotational speed of the drive shaft will not fall outside the speed range formed by these speed limits. The PID controller may thus be configured to maintain the rotational speed of the drive shaft within the speed range. Increasing or decreasing the rotational speed may be obtained by adding/reducing motor torque from the prime mover, such as the electric machine. However, the rotational speed of the drive shaft may also be affected by road profile, road surface conditions, etc. Rotational speed is however the control reference in the PID controller.

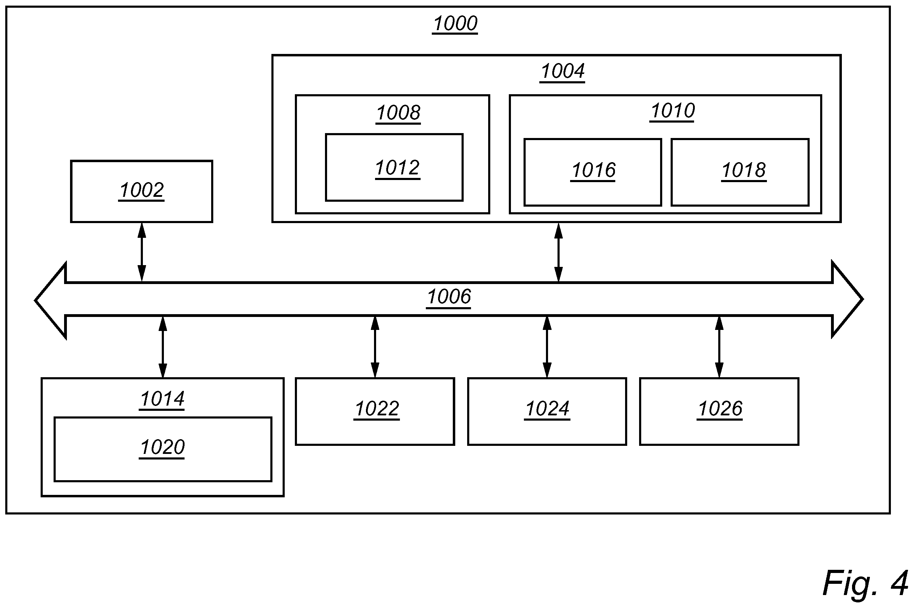

FIG. 4 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A computer system (1000) comprising processing circuitry (1002) configured to: receive a monitored acceleration level of a drive shaft (20, 22, 24) of a vehicle (10); generate a differential lock request for a differential lock (202, 204, 206, 208, 210) of a differential gear (102, 104, 106, 108, 110), the differential lock request being generated in response to the monitored acceleration level exceeding a predetermined acceleration threshold; determine a current wheel speed for each of a pair of wheels (30, 30', 32, 32', 34, 34') of the vehicle; and transmit the differential lock request to the differential lock (202, 204, 206, 208, 210), the differential lock request instructing the differential lock to engage once a difference in wheel speed between the pair of wheels falls below a predetermined speed threshold.

Example 2. The computer system (1000) of example 1, wherein the processing circuitry is configured to: control the acceleration level and/or a rotational speed of the drive shaft to be reduced in response to the difference in wheel speed exceeding the predetermined speed threshold.

Example 3. The computer system (1000) of example 2, wherein the processing circuitry is configured to control the acceleration level of the drive shaft (20, 22, 24) by controlling a prime mover (120) to reduce a propulsion torque delivered to the drive shaft.

Example 4. The computer system (1000) of example 3, wherein the prime mover (120) is an electric machine.

Example 5. The computer system (1000) of any one of the preceding examples, wherein the processing circuitry is configured to receive wheel speed sensor data to determine the current wheel speed.

Example 6. The computer system (1000) of any one of the preceding examples, wherein the processing circuitry is further configured to control the differential lock (202, 204, 206, 208, 210) to engage in response to the difference in wheel speed between the pair of wheels falling below the predetermined speed threshold.

Example 7. The computer system (1000) of any one of the preceding examples, wherein the processing circuitry is further configured to: control the difference in wheel speed between the pair of wheels to be reduced in response to the difference in current wheel speed between the pair of wheels exceeding the predetermined speed threshold.

Example 8. The computer system (1000) of example 7, wherein the processing circuitry is configured to reduce the difference in wheel speed between the pair of wheels by limiting a propulsion torque delivered to the drive shaft.

Example 9. The computer system (1000) of any one of examples 7 or 8, wherein the processing circuitry is configured to reduce the difference in wheel speed between the pair of wheels by limiting a rate of increase of propulsion torque delivered to the drive shaft.

Example 10. The computer system (1000) of any one of examples 7 - 9, wherein the processing circuitry is configured to reduce the difference in wheel speed between the pair of wheels by controlling the rotational speed of the drive shaft.

Example 11. A vehicle (10) comprising the computer system of any of examples 1-10.

Example 12. A computer-implemented method, comprising: monitoring (S1), by processing circuitry (1002) of a computer system (1000), an acceleration level of a drive shaft (20, 22, 24) of a vehicle (10); generating (S2), by the processing circuitry, a differential lock request for a differential lock (202, 204, 206, 208, 210) of a differential gear (102, 104, 106, 108, 110), the differential lock request being generated in response to the monitored acceleration level exceeding a predetermined acceleration threshold; determining (S3), by the processing circuitry, a current wheel speed for each of a pair of wheels (30, 30', 32, 32', 34, 34') of the vehicle; and transmitting (S4), by the processing circuitry, the differential lock request to the differential lock, the differential lock request instructing the differential lock to engage once a difference in wheel speed between the pair of wheels falls below a predetermined speed threshold.

Example 13. The method of example 12, further comprising: controlling, by the processing circuitry, the acceleration level and/or a rotational speed of the drive shaft to be reduced in response to the difference in wheel speed exceeding the predetermined speed threshold.

Example 14. The method of example 13, further comprising: controlling, by the processing circuitry, the acceleration level of the driveshaft by controlling a prime mover (120) to reduce a propulsion torque delivered to the drive shaft.

Example 15. The method of any one of examples 12 - 14, further comprising: receiving, by the processing circuitry, wheel speed sensor data to determine the current wheel speed.

Example 16. The method of any one of examples 12 - 15, further comprising: controlling, by the processing circuitry, the differential lock to engage in response to the difference in wheel speed between the pair of wheels falling below the predetermined speed threshold.

Example 17. The method of any one of examples 12 - 16, further comprising: controlling, by the processing circuitry, the difference in wheel speed between the pair of wheels to be reduced in response to the difference in current wheel speed between the pair of wheels exceeding the predetermined speed threshold.

Example 18. The method of example 17, further comprising: reducing, by the processing circuitry, the difference in wheel speed between the pair of wheels by limiting a propulsion torque delivered to the drive shaft.

Example 19. The method of any one of examples 17 or 18, further comprising: reducing, by the processing circuitry, the difference in wheel speed between the pair of wheels by limiting a rate of increase of propulsion torque delivered to the drive shaft.

Example 20. A computer program product comprising program code for performing, when executed by the processing circuitry, the method of any of examples 12-19.

Example 21. A non-transitory computer-readable storage medium comprising instructions, which when executed by the processing circuitry, cause the processing circuitry to perform the method of any of examples 12-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (1000) comprising processing circuitry (1002) configured to:
receive a monitored acceleration level of a drive shaft (20, 22, 24) of a vehicle (10);
generate a differential lock request for a differential lock (202, 204, 206, 208, 210) of a differential gear (102, 104, 106, 108, 110), the differential lock request being generated in response to the monitored acceleration level exceeding a predetermined acceleration threshold;
determine a current wheel speed for each of a pair of wheels (30, 30', 32, 32', 34, 34') of the vehicle; and
transmit the differential lock request to the differential lock (202, 204, 206, 208, 210), the differential lock request instructing the differential lock to engage once a difference in wheel speed between the pair of wheels falls below a predetermined speed threshold.

2. The computer system (1000) of claim 1, wherein the processing circuitry is configured to:
control the acceleration level and/or a rotational speed of the drive shaft to be reduced in response to the difference in wheel speed exceeding the predetermined speed threshold.

3. The computer system (1000) of claim 2, wherein the processing circuitry is configured to control the acceleration level of the drive shaft (20, 22, 24) by controlling a prime mover (120) to reduce a propulsion torque delivered to the drive shaft.

4. The computer system (1000) of claim 3, wherein the prime mover (120) is an electric machine.

5. The computer system (1000) of any one of the preceding claims, wherein the processing circuitry is configured to receive wheel speed sensor data to determine the current wheel speed.

6. The computer system (1000) of any one of the preceding claims, wherein the processing circuitry is further configured to control the differential lock (202, 204, 206, 208, 210) to engage in response to the difference in wheel speed between the pair of wheels falling below the predetermined speed threshold.

7. The computer system (1000) of any one of the preceding claims, wherein the processing circuitry is further configured to:
control the difference in wheel speed between the pair of wheels to be reduced in response to the difference in current wheel speed between the pair of wheels exceeding the predetermined speed threshold.

8. The computer system (1000) of claim 7, wherein the processing circuitry is configured to reduce the difference in wheel speed between the pair of wheels by limiting a propulsion torque delivered to the drive shaft.

9. The computer system (1000) of any one of claims 7 or 8, wherein the processing circuitry is configured to reduce the difference in wheel speed between the pair of wheels by limiting a rate of increase of propulsion torque delivered to the drive shaft.

10. The computer system (1000) of any one of claims 7 - 9, wherein the processing circuitry is configured to reduce the difference in wheel speed between the pair of wheels by controlling the rotational speed of the drive shaft.

11. A vehicle (10) comprising the computer system of any of claims 1-10.

12. A computer-implemented method, comprising:
monitoring (S1), by processing circuitry (1002) of a computer system (1000), an acceleration level of a drive shaft (20, 22, 24) of a vehicle (10);
generating (S2), by the processing circuitry, a differential lock request for a differential lock (202, 204, 206, 208, 210) of a differential gear (102, 104, 106, 108, 110), the differential lock request being generated in response to the monitored acceleration level exceeding a predetermined acceleration threshold;
determining (S3), by the processing circuitry, a current wheel speed for each of a pair of wheels (30, 30', 32, 32', 34, 34') of the vehicle; and
transmitting (S4), by the processing circuitry, the differential lock request to the differential lock, the differential lock request instructing the differential lock to engage once a difference in wheel speed between the pair of wheels falls below a predetermined speed threshold.

13. The method of claim 12, further comprising:
controlling, by the processing circuitry, the acceleration level and/or a rotational speed of the drive shaft to be reduced in response to the difference in wheel speed exceeding the predetermined speed threshold.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
